(19) Europäisches Patentamt / European Patent Office / Office européen des brevets

(11) **EP 2 378 243 A1**

(12) **EUROPEAN PATENT APPLICATION**

(43) Date of publication:
**19.10.2011 Bulletin 2011/42**

(51) Int Cl.:
*G01B 9/02* (2006.01)   *G01D 5/38* (2006.01)

(21) Application number: **11160627.3**

(22) Date of filing: **31.03.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **12.04.2010 JP 2010091515** | (71) Applicant: **Canon Kabushiki Kaisha**<br>**Tokyo 146-8501 (JP)**<br><br>(72) Inventor: **Ishizuka, Ko**<br>**Tokyo 146-8501 (JP)**<br><br>(74) Representative: **TBK**<br>**Bavariaring 4-6**<br>**80336 München (DE)** |

(54) **Heterodyne interferometry displacement measurement apparatus**

(57)   A heterodyne interferometry displacement measurement apparatus includes a first optical system including a light source (LASER) and a diffraction grating (GTO) that generates two diffracted lights to combine the two diffracted lights to generate a combined light and that causes the two diffracted lights to interfere with each other to generate a first frequency difference signal, a second optical system that converts the combined light into two lights of which frequencies are different from each other by a second frequency difference in accordance with a displacement of an object and that causes the two lights to interfere with each other to generate a second frequency difference signal, and an output device that outputs information of a displacement amount of the object based on the first frequency difference signal and the second frequency difference signal.

FIG. 1

Printed by Jouve, 75001 PARIS (FR)

**Description**

BACKGROUND OF THE INVENTION

Field of the Invention

The present invention relates to a heterodyne interferometry displacement measurement apparatus that uses first and second lights of which polarization states and wavelengths (frequencies) are different from each other.

Description of the Related Art

Recently, a heterodyne interferometry displacement measurement apparatus using a grating-interference-type encoder is used as an apparatus of measuring a relative displacement of a mechanical stage with a resolution of submicron order. Japanese Patent Laid-Open No. H01-156628 discloses a configuration of a heterodyne interferometry displacement measurement apparatus using an electro-optic modulator (EOM), which is used for a step measurement. Japanese Patent No. 3185373 discloses a configuration of a heterodyne interferometry displacement measurement apparatus which is applied as a grating interferometer.

However, the electro-optic modulator is expensive, and a special driving circuit is needed to change a voltage at a constant rate with high precision. Additionally, a material that is used for the electro-optic modulator is sensitive in the surrounding environment. Therefore, it is difficult to be applied to an inexpensive heterodyne-type interference measurement apparatus or encoder.

SUMMARY OF THE INVENTION

The present invention provides a heterodyne interferometry displacement measurement apparatus without an electro-optic modulator.

The present invention in its first aspect provides a heterodyne interferometry displacement measurement apparatus as specified in claims 1 to 4.

Further features and aspects of the present invention will become apparent from the following description of exemplary embodiments with reference to the attached drawings.

BRIEF DESCRIPTION OF THE DRAWINGS

Fig. 1 is a configuration diagram of a heterodyne interferometry displacement measurement apparatus in Embodiment 1.

Fig. 2 is a configuration diagram of a heterodyne interferometry displacement measurement apparatus in Embodiment 2.

Fig. 3 is a configuration diagram of a heterodyne interferometry displacement measurement apparatus in Embodiment 3.

Fig. 4 is a configuration diagram of a heterodyne interferometry displacement measurement apparatus in Embodiment 4.

Fig. 5 is a configuration diagram of a double-frequency light source in Embodiment 5.

Fig. 6 is a configuration diagram of a double-frequency light source in Embodiment 6.

DESCRIPTION OF THE EMBODIMENTS

Exemplary embodiments of the present invention will be described below with reference to the accompanied drawings. In each of the drawings, the same elements will be denoted by the same reference numerals and the duplicate descriptions thereof will be omitted.

[Embodiment 1]

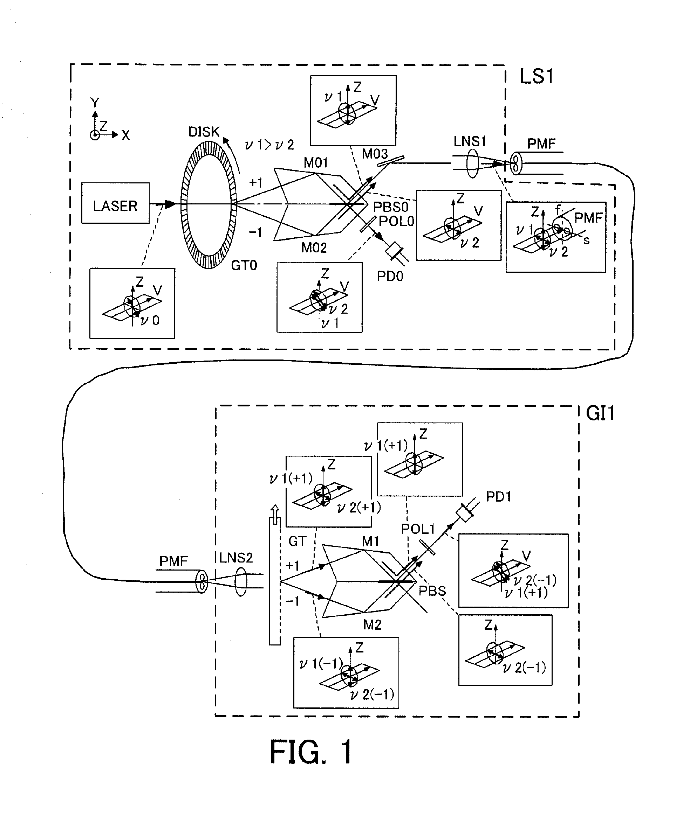

First of all, a heterodyne interferometry displacement measurement apparatus in Embodiment 1 of the present invention will be described. Fig. 1 is a configuration diagram of the heterodyne interferometry displacement measurement apparatus in the present embodiment. The heterodyne interferometry displacement measurement apparatus is configured by including a double-frequency light source unit LS1, a grating-interference-type-encoder optical system GI1, and a polarization-maintaining fiber PMF. The double-frequency light source unit LS1 illuminates a light having a single color onto a diffraction grating on a rotary disk and performs ±1st-order diffraction to provide a frequency difference to form polarization planes of the two diffracted lights to be orthogonal to each other. The light from the double-frequency light source unit LS1 enters the grating-interference-type-encoder optical system GI1 via the polarization-maintaining fiber PMF, and the grating-interference-type-encoder optical system GI1 obtains a frequency signal which is generated by providing a frequency difference of the double-frequency light source unit LS1 with a frequency difference (a phase shift) caused by the movement of a scale.

A parallel light of a frequency ν0 (that is a linear polarized light of a 45-degree direction) emitted from a laser light source LASER (a light source) enters a rotary disk DISK (a diffraction grating disk) as a rotary member that rotates (is rotatable) at a constant velocity. A diffraction grating GT0 is formed on the rotary disk DISK. An optical system (not shown) generates two diffracted lights (±1st-order diffracted lights) having orders different from each other that are obtained by illuminating them from the laser light source LASER to the diffraction grating GT0 and that have a predetermined reference frequency difference (a first frequency difference).

The two diffracted lights (±1st-orde diffracted lights) are reflected on parallel mirrors M01 and M02 to enter a polarizing beam splitter PBS0 (a polarizing prism). Two combined lights that are synthesized on the same axis are emitted from the polarizing beam splitter PBS0, and in the present embodiment the light emitted to the upper side of Fig. 1 will be used. The +1st-order diffracted light having a frequency ν1 of the light emitted to the upper side of Fig. 1 is a linear polarized light of a 0-degree direction that is reflected by the polarizing beam splitter PBS0. On the other hand, the -1st-order diffracted light of a frequency ν2 is a linear polarized light of a 90-degree direction that transmits through the polarizing beam splitter PBS0. Thus, the polarizing beam splitter PBS0 generates two combined lights that have the same direction, the same axis, and polarization planes orthogonal to each other based on the two diffracted lights (±1st-orde diffracted lights).

When the rotary disk DISK rotates at a rotational velocity at which N grating lines move per one second, the frequency ν1 of the +1st-order diffracted light is ν0+N, and the frequency ν2 of the -1st-order diffracted light is ν0-N where a frequency of an original light is ν0. For example, when a radius of a radial diffraction grating track of the rotary disk DISK is 9.2 mm, the number of the gratings in each cycle is 20250, and the rotational velocity is 10000 RPM, N is equal to 3375000. Therefore, the frequency ν1 of the +1st-order diffracted light is ν0+3.375 MHz, and the frequency ν2 of the -1st-order diffracted light is ν0-3.375 MHz. The frequency ν0 is a frequency of the original laser light source LASER, and the frequency ν0 is obtained as represented by the following Expression (1) when the laser light source LASER has a wavelength 850nm for example.

$$\nu0 = 299792458/(850 \times 10^{-9}) = 352.6 \text{THz} \quad \dots \quad (1)$$

If the frequency ν0 of the laser light source LASER fluctuates, the frequencies ν1 and ν2 of the double-frequency light also vary. In addition, the frequency difference 6.75MHz of the ±1st-order diffracted lights varies by receiving the influence of the rotational velocity variation of the rotary disk or the lithography error of the diffraction grating. Therefore, when a light from the double-frequency light source unit LS1 is applied to an interferometer (for example, a Michelson interferometer) that has an optical path length difference, it is preferable that a light source that has small variation of the frequency ν0 (for example, a wavelength stabilized HeNe laser) is used. Furthermore, it is preferable that an apparatus in which the rotational variation of the rotary disk or the lithography error of the diffraction grating is small is used.

However, since the grating-interference-type encoder can set the optical path length difference of the ±1st-order diffracted lights as an optical design to zero or around zero, it is not influenced by the variation of the frequency ν0 in principle. Even if the frequencies ν1 and ν2 are varied by the generation of the rotary disk, any error does not occur since the difference of the frequencies ν1 and ν2 are always used as a reference frequency (if an interferometer that has an optical path length difference is used, variations of the frequencies ν1 and ν2 per unit time cause an error). Thus, the two-frequency lights are obtained based on the ±1st-order diffracted lights from the rotary disk DISK to be able to be applied to the grating-interference-type encoder.

The two lights of the +1st-order diffracted light (frequency ν1) and the -1st-order diffracted light (frequency ν2) are overlapped on the same axis, and the polarization planes are orthogonal to each other. These lights are collected by a lens LNS1 and are guided along the polarizing axes (f-axis and s-axis) of the polarization-maintaining fiber PMF. Then, they are emitted as divergent lights that are overlapped on the same axis and that have polarization planes orthogonal to each other from an opposite end surface of the polarization-maintaining fiber PMF. Even if the polarization-maintaining fiber PMF is not particularly relayed, it is applicable as an encoder optical system. Therefore, the polarization-maintaining fiber PMF and lenses LNS1 and LNS2 in front of and behind it may also be omitted. In Fig. 1, as one example, the light of the frequency ν1 is transmitted along the f-axis of the polarization-maintaining fiber PMF, and the light of the frequency ν2 is transmitted along the s-axis of the polarization-maintaining fiber PMF.

Next, a light emitted from the polarizing beam splitter PBS0 to the lower side will be considered. The +1st-order diffracted light ν1 of the lights emitted to the lower side of Fig. 1 is a linear polarized light of a 90-degree direction since it transmits through the polarizing beam splitter PBS0. On the other hand, the -1st-order diffracted light ν2 is a linear polarized light of the 90-degree direction since it is reflected on the polarizing beam splitter PBS0. These two lights are overlapped on the same axis and the polarization planes of the lights are orthogonal to each other. In addition, these two lights transmit through a polarization plate POLO of a 45-degree direction to select a polarization component of the 45-degree direction and therefore an interference phenomenon occurs since both the polarization planes coincide with each other. The optical path lengths of these two lights are set to be equal to each other. The frequency of the interference light is ν1-ν2 (a first frequency difference of the two diffracted lights), and the frequency ν1-ν2 is used as a reference frequency signal (a first frequency difference signal) of the double-frequency light source. Thus, in the present embodiment, a first interference optical system that generates the first frequency difference signal by the interference of the combined lights maintaining the first frequency difference is provided.

The two coaxial lights outputted from the double-frequency light source unit LS1 are emitted as divergent lights from the polarization-maintaining fiber PMF. The divergent lights are converted into parallel lights by a collimater lens LNS2 to be illuminated onto the diffraction grating GT (a grating pitch P1) on the scale. The diffraction grating GT (scale) moves in accordance with a displacement amount of an object to be measured. The +1st-order diffracted lights of the frequencies ν1(+1) and ν2(+1) generated by the diffraction grating GT are reflected on a parallel mirror M1, and further they contain only the light of the frequency ν1(+1) when only the linear polarization component of the 0-degree direction is reflected on the polarizing beam splitter PBS. On the other hand, the -1st-order diffracted lights of the frequencies ν1(-1) and ν2(-1) generated by the diffraction grating GT are reflected on a parallel mirror M2, and further they contain only the light of the frequency ν2(-1) when only the linear polarization component of the 90-degree direction is reflected on the polarizing beam splitter PBS. These two lights have polarization directions orthogonal to each other and travel on the same axis.

Furthermore, a polarization component of the 45-degree direction is selected by the polarization plate POL1 and therefore both the polarization planes coincide with each other to generate an interference phenomenon. This interference signal is a modulation frequency signal (a second frequency difference signal) having a frequency ν1(+1)-ν2(-1), i.e. a second frequency difference in accordance with a displacement of the object to be measured. In other words, the frequency ν1(+1) of the +1st-order diffracted light from the diffraction grating GT on the scale is equal to ν1+Δν, and the frequency ν2(-1) of the -1st-order diffracted light is equal to ν2-Δν. In the embodiment, Δν is represented by Δν=M when the M scale move per one second. Therefore, when it is received by a light receiving element PD1 via the polarization plate of the 45-degree direction, a sine-shaped periodic signal that is represented by the following Expression (2) is obtained.

$$\nu1(+1)-\nu2(-1)=\nu1-\nu2+2\Delta\nu \ \dots \ (2)$$

In a configuration example of the double-frequency light source unit LS1, the frequency described above is obtained as represented by the following Expression (3).

$$\nu1(+1)-\nu2(-1)=(\nu0+3.375\mathrm{MHz})-(\nu0-3.375\mathrm{MHz})+2\Delta f$$
$$=6.75\mathrm{MHz}+2\Delta\nu \ \dots \ (3)$$

The reference frequency signal (the reference frequency difference) described above is obtained as represented by the following Expression (4).

$$\nu1-\nu2=(\nu0+3.375\mathrm{MHz})-(\nu0-3.375\mathrm{MHz})=6.75\mathrm{MHz} \ \dots \ (4)$$

An optical path length up to the light receiving element PD0 of the optical system needs to be equal to an optical path length up to the light receiving unit PD1 of the grating interferometer.

In the present embodiment, the grating-interference-type-encoder optical system GI1 is a second interference optical system that converts the incident combined lights into the two lights having a second frequency difference in accordance with the displacement of the object to be measured and that generates a second frequency difference signal by the interference of these two lights. Additionally, in the present embodiment, a unit (not shown) that calculates and outputs information related to the displacement amount of the object to be measured based on information of the difference between the first frequency difference signal and the second frequency difference signal is provided. When the unit (calculating unit) compares the frequencies of these two periodic signals or calculates the difference of the frequencies ($2\Delta\nu$) to be converted into a phase change (2M), information related to the displacement amount and the direction of the object to be measured (the diffraction grating GT) are obtained. In other words, when a phase changes by +4n, the grating on the scale is supposed to move by one to the plus(+) side. According to the heterodyne interferometry displacement measurement apparatus of the present embodiment, as similarly to the case of a common (homodyne-type) grating-interference-type encoder, a sign can be obtained and also a high-resolution measurement can be performed by the interpolation.

As described above, the double-frequency light source unit LS1 using the rotary disk DISK and the grating-interference-type-encoder optical system GI1 whose optical path length difference is zero are combined to be able to achieve a high-precision heterodyne interferometry displacement measurement apparatus. In the heterodyne interferometry displacement measurement apparatus of the present embodiment, special electric circuit, material, and module are not required, and therefore it is small and inexpensive. Furthermore, since it is used on condition that the optical path length difference is around zero, sufficient precision and stabilization is provided even if the stabilization of the frequencies of the double-frequency light source is not particularly required.

Generally, in an acousto-optical modulator, an output light with respect to an input light is around 50% when a material such as InP having a band of 630nm is used. On the other hand, in the present embodiment, since a lamellar phase grating in which a cross section of a rotating diffraction grating has a concave-convex shape is used, light of around 40% of each of the $\pm$1st-order diffracted lights can be ensured, and an efficiency of 80% in total is obtained. Accordingly, compared with a double-frequency light source using an acousto-optical modulator or an electro-optic modulator, a loss caused by the optical system that generates the double-frequency lights is small and therefore the double-frequency light source of the present embodiment is effective.

[Embodiment 2]

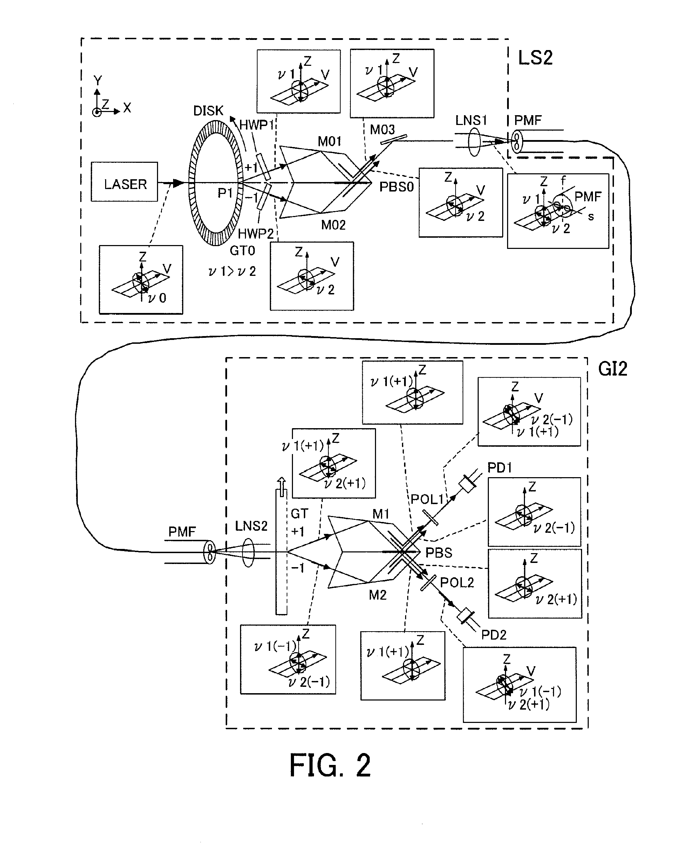

Next, a heterodyne interferometry displacement measurement apparatus in Embodiment 2 of the present invention will be described. Fig. 2 is a configuration diagram of the heterodyne interferometry displacement measurement apparatus in the present embodiment. The present embodiment is different from the configuration of Embodiment 1 in that a double-frequency light source unit LS2 and a grating-interference-type-encoder optical system GI2 are used.

A linear polarized parallel light of a 45-degree polarization direction from a laser light source LASER (a light source) is illuminated onto a point P1 of a radial diffraction grating GT0 of a rotary disk DISK to generate two diffracted lights (frequencies $\nu$1 and $\nu$2). A +1st-order diffracted light of the frequency $\nu$1 transmits through a half-wave plate HWP1 in which an optical axis is displaced by -22.5 degrees to be converted into a linear polarized light of a 0-degree direction, and is reflected on a parallel mirror M01. On the other hand, the -1st-order diffracted light of the frequency $\nu$2 transmits through a half-wave plate HWP2 in which the optical axis is displaced by 22.5 degrees to be converted into a linear polarized light of a 90-degree direction, and is reflected on a parallel mirror M02. These diffracted lights are finally in a state of linear polarized lights orthogonal to each other to enter a polarizing beam splitter PBS0. Since the linear polarized beam of a 90-degree direction transmits through and the linear polarized beam of the 0-degree direction is reflected by the polarizing beam splitter PBS0, 100% of the lights synthesized on the same axis can be emitted from an upper side. However, in the present embodiment, it is not enough to obtain the reference frequency signal described in Embodiment 1.

The coaxial double-frequency light (the combined light) having the frequencies $\nu$1 and $\nu$2 is, similarly to Embodiment 1, illuminated onto the diffraction grating GT on the scale via the polarization-maintaining fiber PMF. The +1st-order diffracted light having the frequencies $\nu$1(+1) and $\nu$2(+1) that is generated by the diffraction grating GT is reflected by the parallel mirror M1. Furthermore, when the +1st-order diffracted light is reflected by the polarizing beam splitter PBS as a linear polarized light of the 0-degree direction, it only contains the frequency $\nu$1(+1). The -1st-order diffracted light having the frequencies $\nu$1(-1) and $\nu$2(-1) that is generated by the diffraction grating GT is reflected by the parallel mirror M2. Furthermore, when the -1st-order diffracted light is reflected by the polarizing beam splitter PBS as a linear polarized light of the 90-degree direction, it only contains the frequency $\nu$2(-1). These two lights (first two lights having a second frequency difference) have polarization directions orthogonal to each other and travel on the same axis.

Furthermore, a polarization component of the 45-degree direction is selected by a polarization plate POL1, and therefore both the polarization planes coincide with each other to generate an interference phenomenon. The signal obtained as described above is a first heterodyne frequency signal having a frequency $\nu$1(+1)-$\nu$2(-1), i.e. a second frequency difference. This signal is outputted from a light receiving element PD1, and the frequency increases when the scale having the diffraction grating GT moves in an arrow direction (an upward direction) in Fig. 2. Thus, the grating-interference-type-encoder optical system GI2 is a second interference optical system that converts the incident combined lights into the first two lights having the second frequency difference in accordance with the displacement of an object to be measured to generate a second frequency difference signal by the interference of these first lights.

The +1st-order diffracted light having the frequencies $\nu1(+1)$ and $\nu2(+1)$ that is generated by the diffraction grating GT is reflected by the parallel mirror M1. Furthermore, when the +1st-order diffracted light transmits through the polarizing beam splitter PBS as a linear polarization component of the 90-degree direction, it only contains the light of frequency $\nu2(+1)$. On the other hand, the -1st-order diffracted light having the frequencies $\nu1(-1)$ and $\nu2(-1)$ that is generated by the diffraction grating GT is reflected by the parallel mirror M2. Furthermore, when the -1st-order diffracted light is reflected by the polarizing beam splitter PBS as a linear polarization component of the 0-degree direction, it only contains the light of frequency $\nu1(+1)$. These two lights (second two lights having a third frequency difference) have polarization directions orthogonal to each other and travel on the same axis.

Furthermore, a polarization component of the 45-degree direction is selected by a polarization plate POL2, and therefore both the polarization planes coincide with each other to generate an interference phenomenon. This interference signal is a second heterodyne frequency signal having a frequency $\nu1(-1)-\nu2(+1)$, i.e. a third frequency difference. This signal is outputted from a light receiving element PD2, and the frequency decreases when the scale having the diffraction grating GT moves in an arrow direction (an upward direction) in Fig. 2. Thus, the grating-interference-type-encoder optical system GI2 is a second interference optical system that converts the incident combined lights into the second two lights having the third frequency difference in accordance with the displacement of the object to be measured to generate a third frequency difference signal by the interference of these second lights.

The signals outputted from the light receiving elements PD1 and PD2 are interpreted as signals in which frequencies (or phases) are shifted in opposite directions around the virtual reference signal frequency $\nu1-\nu2$. Therefore, if the difference of these two heterodyne signals is obtained by a calculating unit (not shown) to be converted into a phase change, information of the displacement amount and the direction are obtained. In other words, the calculating unit is a unit that calculates and outputs the information related to the displacement amount of the object to be measured based on information of the difference between the second frequency difference signal and the third frequency difference signal. However, differently from Embodiment 1, the resolution is twice as high because the phase difference changes by 8n if the grating on the scale moves by one to the plus(+) side. Similarly to a case of a common (homodyne) grating-interference-type encoder that is not a heterodyne encoder, a sign is obtained and also an interpolation is performed. Since a second heterodyne interference light obtained by the light receiving element PD2 is not used in Embodiment 1, the use efficiency of the light of the grating-interference-type-encoder optical system GI2 is twice as high and therefore it is advantageous.

Furthermore, the following superior performance is obtained in the present embodiment compared with Embodiment 1. Generally, when linear polarized lights transmit the f-axis and the s-axis of the polarization-maintaining fiber PMF, an optical path length (a value obtained by dividing a real length by a refractive index) of the f-axis and the s-axis unstably varies if a disturbance such as a bend or a vibration is applied to the polarization-maintaining fiber PMF. Therefore, the frequencies of the transmitted light (frequency $\nu1$ and $\nu2$) are shifted from frequencies at the time of the entrance. When the polarization-maintaining fiber PMF is applied to the light transmission unit of the encoder in Embodiment 1, it needs to be designed so as not to apply the disturbance. Accordingly, a mirror is used for the transmission path in Embodiment 1. On the other hand, when frequencies of the transmitted double-frequency light of the polarization-maintaining fiber PMF are defined as frequencies $\nu1'$ and $\nu2'$, frequency components finally obtained by the light receiving elements PD1 and PD2 are common $\nu1'-\nu2'$ and therefore the difference is not influenced in the present embodiment. In other words, even if there is a disturbance such as a vibration is applied to the polarization-maintaining fiber PMF, the measurement error does not occur. In addition, even if an initial double-frequency light source frequency varies on the ground of the rotary disk, it is not influenced.

Thus, according to the present embodiment, a high-precision and inexpensive heterodyne interferometry displacement measurement apparatus can be provided.

[Embodiment 3]

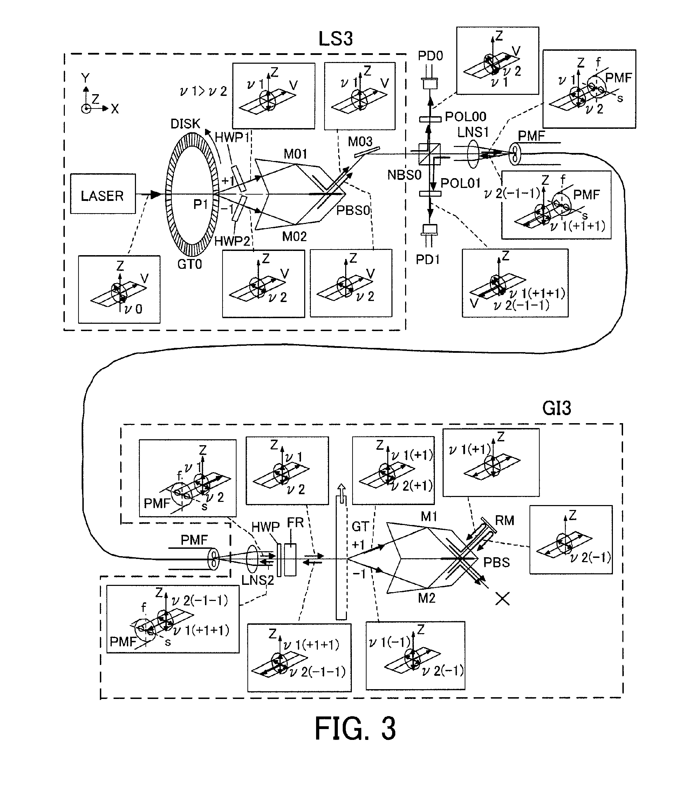

Next, a heterodyne interferometry displacement measurement apparatus in Embodiment 3 of the present invention will be described. Fig. 3 is a configuration diagram of the heterodyne interferometry displacement measurement apparatus in the present embodiment. In the present embodiment, the configuration of a grating-interference-type-encoder optical system is changed, and a heterodyne signal light receiving unit (a light receiving element PD1) is provided at a light source side. Additionally, in the present embodiment, a light from a double-frequency light source unit LS3 transmits back and forth using a polarization-maintaining fiber when it enters a grating-interference-type-encoder optical system GI3.

A linear polarized parallel light of a 45-degree polarization direction from a laser light source LASER is illuminated onto a point P1 of a radial diffraction grating GT0 of a rotary disk DISK to generate two diffracted lights (frequencies $\nu1$ and $\nu2$). A +1st-order diffracted light of the frequency $\nu1$ transmits through a half-wave plate HWP1 in which an optical axis is displaced by -22.5 degrees to be a linear polarized light of a 0-degree direction, and is reflected on a parallel mirror M01. On the other hand, a -1st-order diffracted light of the frequency ν2 transmits through a half-wave plate HWP2 in which an optical axis is displaced by +22.5 degrees to be a linear polarized light of a 90-degree direction, and is reflected on a parallel mirror M02. These lights finally become linear polarized lights orthogonal to each other to enter a polarizing beam splitter PBS0.

Since a P-polarized light transmits through and an S-polarized light is reflected by the polarizing beam splitter PBS0, 100% of the combined lights on the same axis can be emitted only from an upper side. Once, these transmit through a non-polarizing beam splitter NBS0. The reflected light transmits through a polarization plate POL00 of a 45-degree direction to be detected by a light receiving element PD0 as a reference frequency signal.

The light of the frequency ν1 of the coaxial double-frequency light is transmitted along the f-axis of the polarization-maintaining fiber PMF and the light of the frequency ν2 is transmitted along the s-axis of the polarization-maintaining fiber PMF. The two lights transmitted through the polarization-maintaining fiber PMF are converted into parallel lights by a lens LNS2. Then, the direction of the linear polarized light of the 22.5 direction is rotated by the half-wave plate HWP by -45 degrees, and the direction of the polarized light is further rotated by a Faraday element FR by +45 degrees to be illuminated onto the diffraction grating GT on the scale. The Faraday element FR is a kind of crystal optical element and is an optical element capable of rotating a polarization plane of a light in proportion to a direction and an amount of a magnetic field when the magnetic field is applied.

The +1st-order diffracted light having the frequency ν1(+1) that is generated by the diffraction grating GT is reflected by the parallel mirror M1 as a linear polarized light of the 0-degree direction, and the +1st-order diffracted light having the frequency ν2(+1) is reflected by the parallel mirror M1 as a linear polarized light of the 90-degree direction. Furthermore, when the +1st-order diffracted light is reflected by the polarizing beam splitter PBS as a linear polarized light of the 0-degree direction, it only contains the frequency ν1(+1). The -1st-order diffracted light having the frequencies ν1(-1) and ν2(-1) that is generated by the diffraction grating GT is reflected by the parallel mirror M2. Furthermore, when the -1st-order diffracted light transmits through the polarizing beam splitter PBS as a linear polarized light of the 90-degree direction, it only contains the frequency ν2(-1). These two lights have polarization directions orthogonal to each other, and travel on the same axis and are returned to the original optical path by a return mirror RM.

When the light having the frequency ν1(+1) reflected by the polarizing beam splitter PBS further performs +1st-order diffraction using the diffraction grating GT via the mirror M1, it is converted into a light having a frequency ν1(+1+1) to transmit through the Faraday element FR. When the light having the frequency ν2(-1) transmitted through the polarizing beam splitter PBS further performs -1st-order diffraction using the diffraction grating GT via the mirror M2, it is converted into a light having a frequency ν2(-1-1) to transmit through the Faraday element FR. The Faraday element is a crystal optical element that has an effect of rotating a direction of a polarized light by applying a magnetic field, and has a property of rotating the direction of the polarized light in the same direction even if a light transmits in any direction. For example, a Faraday element which is made of a material such as garnet-based material and to which a constant magnetic field is applied to be set so that a direction of a polarized light rotates by 45 degrees is commercially available.

The Faraday element FR rotates the direction of the linear polarized light by +45 degrees and further the half-wave plate HWP rotates the direction by +45 degrees. Therefore, the direction of the linear polarized light having the frequency ν1(+1+1) becomes 90 degrees and the direction of the linear polarized light having the frequency ν2(-1-1) becomes 0 degree. Since the direction of the polarized light obtained by transmitting the half-wave plate HWP from left to right rotates by -45 degrees, the rotation by +45 degrees is obtained when the light transmits in an opposite direction. Accordingly, the direction of the linear polarized light having the frequency ν1(+1+1) is parallel to the s-axis of the polarization-maintaining fiber PMF, and the direction of the linear polarized light having the frequency ν2(-1-1) is parallel to the f-axis of the polarization-maintaining fiber PMF. In an outward path, since the light of the frequency ν1 is parallel to the f-axis and the light of the frequency ν2 is parallel to the s-axis, these are replaced with each other.

Two lights returned from the polarization-maintaining fiber PMF are returned up to the non-polarizing beam splitter NBSO, and a part of the lights are reflected and transmits through a polarization plate POL01 of the 45-degree direction to enter the light receiving element PD1. A heterodyne signal that is a difference between lights having the frequencies ν1(+1+1) and ν2(-1-1) is obtained from the light receiving element PD1. This heterodyne signal is compared with the reference frequency signal from the light receiving element PD0 to be converted into a phase signal to be able to calculate and output a displacement amount and a direction of the diffraction grating GT.

In the present embodiment, compared with Embodiment 2, the following superior effect can be obtained. Generally, when linear polarized lights transmit the f-axis and the s-axis of the polarization-maintaining fiber PMF respectively, an optical path length (a value obtained by dividing a real length by a refractive index) of the f-axis and the s-axis unstably varies if a disturbance such as a bend or a vibration is applied to the polarization-maintaining fiber PMF. Therefore, the frequencies ν1 and ν2 of the transmitted lights are shifted from a frequency at the time of the entrance.

However, when an optical fiber is applied to the encoder of Fig. 3, two lights transmit the polarization-maintaining fiber PMF back and forth so that the polarization planes are replaced with each other. Therefore, the optical path length is optically equal to each other and an error caused by a disturbance does not occur. In other words, a measurement error does not occur even if a disturbance such as a vibration is applied to the polarization-maintaining fiber PMF. In addition, it is not influenced even if a frequency of the double-frequency light source unit varies on the ground of the rotary disk.

Thus, according to the present embodiment, a high-precision and inexpensive heterodyne interferometry displacement measurement apparatus can be provided.

[Embodiment 4]

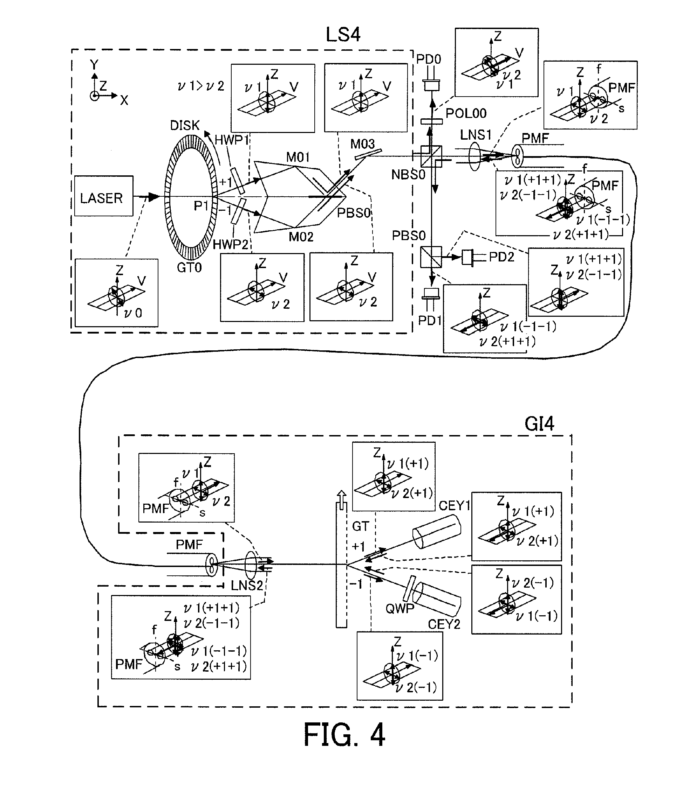

Next, a heterodyne interferometry displacement measurement apparatus in Embodiment 4 of the present invention will be described. Fig. 4 is a configuration diagram of the heterodyne interferometry displacement measurement apparatus in the present embodiment. In the present embodiment, a type of an optical fiber transmission and a configuration of a grating-interference-type-encoder optical system are changed. In other words, when a light from a double-frequency light source unit LS4 enters a grating-interference-type-encoder optical system GI4, the light in the outward path transmits through a polarization-maintaining fiber PMF as a double-frequency light and the light in a return path transmits as two interference lights.

A linear polarized parallel light of the 45-degree polarization direction from a laser light source LASER is illuminated onto a point P1 of a radial diffraction grating GT0 of a rotary disk DISK to generate two diffracted lights (frequencies $\nu1$ and $\nu2$). A +1st-order diffracted light of the frequency $\nu1$ transmits through a half-wave plate HWP1 in which an optical axis is displaced by -22.5 degrees to be a linear polarized light of a 0-degree direction, and is reflected on a parallel mirror M01. On the other hand, a -1st-order diffracted light of the frequency $\nu2$ transmits through a half-wave plate HWP2 in which an optical axis is displaced by +22.5 degrees to be a linear polarized light of a 90-degree direction, and is reflected on a parallel mirror M02. These diffracted lights finally become linear polarized lights orthogonal to each other to enter a polarizing beam splitter PBS0.

A linear polarized light of the 90-degree direction transmits through and a linear polarized light of the 0-degree direction is reflected by the polarizing beam splitter PBS0. Therefore, 100% of the combined lights on the same axis can be emitted only from an upper side. Once, these lights transmit through a non-polarizing beam splitter NBS0. The reflected light transmits through a polarization plate POL00 of the 45-degree direction to be able to be detected by a light receiving element PD0 as a reference frequency signal, but it does not have to be used.

The coaxial double-frequency light (frequencies $\nu1$ and $\nu2$) is, similarly to Embodiment 3, illuminated onto the diffraction grating GT on the scale via the polarization-maintaining fiber PMF. In this case, the linear polarized light having a frequency $\nu1$ is adjusted to the f-axis of the polarization-maintaining fiber PMF, and the linear polarized light having a frequency $\nu2$ is adjusted to the s-axis of the polarization-maintaining fiber PMF.

The +1st-order diffracted light having frequencies of $\nu1(+1)$ and $\nu2(+1)$ that is generated by the diffraction grating GT is reflected by a cat's-eye CEY1 and then it is returned to the original optical path. On the other hand, the -1st-order diffracted light having frequencies of $\nu1(-1)$ and $\nu2(-1)$ that is generated by the diffraction grating GT transmits through a quarter-wave plate QWP and then is reflected by a cat's-eye CEY2 to be returned to the original optical path. Since the -1st-order diffracted light transmits through the quarter-wave plate QWP also in the return path, the direction of each of the polarized lights rotates by 90 degrees. Therefore, when the light enters the polarization-maintaining fiber PMF again in the return path, the light having the frequency $\nu1(+1+1)$ and the light having the frequency $\nu2(-1-1)$ are transmitted so as to be adjusted to the f-axis of the polarization-maintaining fiber PMF. Furthermore, the light having the frequency $\nu1(-1-1)$ and the light having the frequency $\nu2(+1+1)$ are transmitted so as to be adjusted to the s-axis of the polarization-maintaining fiber PMF. In this case, these lights are transmitted in a state where the intensity is modulated as interference light in each of the f-axis and the s-axis.

These two lights are transmitted independently in the polarization-maintaining fiber PMF to be emitted to the outside, and are reflected by the non-polarizing beam splitter NBSO and are further divided by the polarizing beam splitter PBS0 every polarization component. The transmitted light of the polarizing beam splitter PBS0 is an interference signal that is obtained by transmitting the s-axis of the polarization-maintaining fiber PMF. This interference signal is a first heterodyne signal that has a frequency represented by $\nu1(-1-1)-\nu2(+1+1)$. The first heterodyne signal is outputted from the light receiving element PD1 and its frequency decreases when the scale moves in an arrow direction (an upward direction) in Fig. 4.

On the other hand, the reflected light of the polarizing beam splitter PBS0 is an interference signal that is obtained by transmitting the f-axis of the polarization-maintaining fiber PMF. This interference signal is a second heterodyne signal whose frequency is represented by $\nu1(+1+1)-\nu2(-1-1)$. The second heterodyne signal is outputted from the light receiving element PD2, and its frequency increases when the scale moves in the arrow direction (the upward direction) in Fig. 4.

Thus, the output signals of the light receiving elements PD1 and PD2 are interpreted as signals in which frequencies (or phases) are shifted in opposite directions around the virtual reference signal frequency $\nu1-\nu2$. Therefore, if the difference of these two heterodyne signals is obtained to be converted into a phase change, information of the displacement amount and the direction are obtained. When the diffraction grating GT on the scale moves by one in the arrow direction (the upward direction) in Fig. 4, a sine-wave signal of eight cycles is generated since the phase difference changes by 16n. In this case, similarly to a case of a common (homodyne) grating-interference-type encoder that is not a heterodyne encoder, a sign of the phase shift is obtained and an interpolation can also be performed. The reference frequency signal obtained by the light receiving element PD0 is not particularly used in the embodiment of Fig. 4.

Furthermore, the following superior performance is obtained in the present embodiment compared with Embodiment 3. Generally, when linear polarized lights transmit the f-axis and the s-axis of the polarization-maintaining fiber PMF, an optical path length (a value obtained by dividing a real length by a refractive index) of the f-axis and the s-axis unstably varies if a disturbance such as a bend or a vibration is applied to the polarization-maintaining fiber PMF. Therefore, the frequencies $\nu1$ and $\nu2$ of the transmitted light are shifted from frequencies at the time of the entrance. Accordingly, when an optical fiber is applied to the encoder of Fig. 1, it needs to be designed so as not to apply the disturbance.

In the present embodiment, the frequencies of the double-frequency light after transmitting the polarization-maintaining fiber PMF are replaced as $\nu1'$ and $\nu2'$. The difference is not influenced because both the two interference signal components have a frequency component $\nu1'-\nu2'$ in common. In other words, a measurement error does not occur even if a disturbance such as a vibration is applied to the polarization-maintaining fiber PMF. In addition, it is not influenced even if a frequency of the double-frequency light source unit varies on the ground of the rotary disk.

Thus, according to the present embodiment, a high-precision and inexpensive heterodyne interferometry displacement measurement apparatus can be provided.

[Embodiment 5]

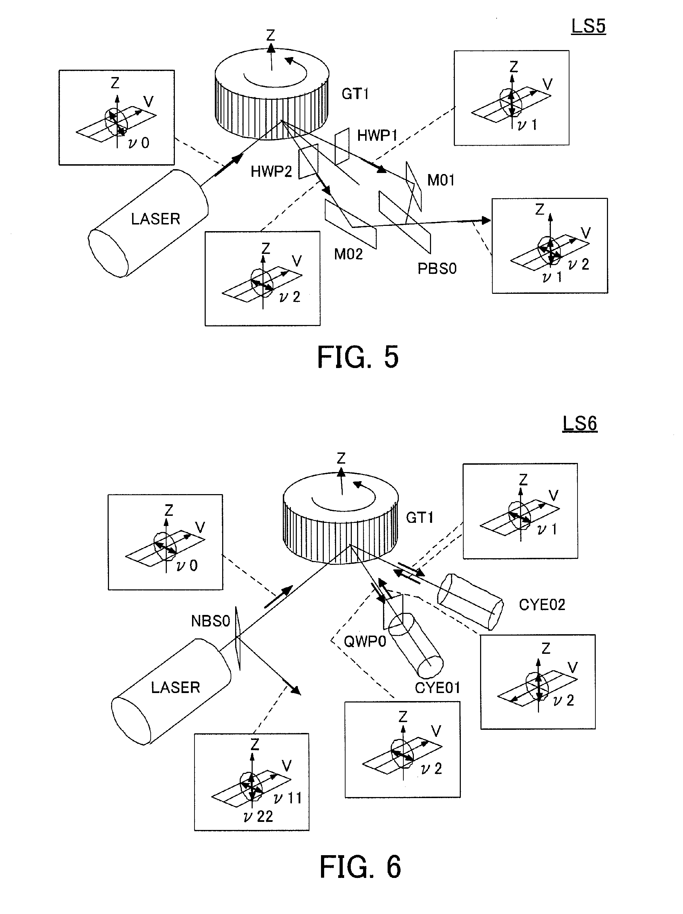

Next, a double-frequency light source in Embodiment 5 of the present invention will be described. Fig. 5 is a configuration diagram of a double-frequency light source unit LS5 in the present embodiment. The double-frequency light source unit LS5 of the present embodiment gives a frequency difference by rotating a cylindrical surface on which a linear grating is recorded and performing the ±1st-order diffraction.

A parallel light from a laser light source LASER is illuminated onto a diffraction grating GT1 (a reflecting linear diffraction grating) on a side surface of a rotary cylinder to generate two diffracted lights. A +1st-order diffracted light is reflected by a parallel mirror M1 and transmits through a half-wave plate HWP1 in which an optical axis is displaced by 22.5 degrees to be a linear polarized light of a 0-degree direction. On the other hand, a -1st-order diffracted light is reflected by a parallel mirror M2 and transmits through a half-wave plate HWP2 in which an optical axis is displaced by -22.5 degrees to be a linear polarized light of a 90-degree direction. These lights finally become combined lights on the same two axes by a polarizing beam splitter PBS0 to be emitted. Since the emitted light has a distortion by the reflection on the cylindrical surface, it is preferable that a correction is performed by using a toric lens or the like in a case where the emitted light is used by entering the optical fiber.

As described in Embodiments 1 to 4, when a disk on which a radial diffraction grating GT0 is adopted to be rotated in a state where a pattern center of a radial grating and a rotation center are displaced (the decentering exists), a grating pitch in an area where a light is illuminated varies. In this case, since an emission direction of a diffracted light varies, the decentering needs to be reduced. However, as described in the present embodiment, a stable optical system can be configured using the diffraction grating GT1 on the cylindrical surface because the grating pitch does not vary even if the displacement (the decentering) between the rotation center and the cylindrical center exists.

[Embodiment 6]

Next, a double-frequency light source in Embodiment 6 of the present invention will be described. Fig. 6 is a configuration diagram of a double-frequency light source unit LS6 in the present embodiment. The double-frequency light source unit LS6 of the present embodiment gives a frequency difference by rotating a cylindrical surface on which a linear grating is recorded and performing the ±1st-order diffraction back and forth.

A parallel light from a laser light source LASER transmits through a non-polarizing beam splitter NBSO to be illuminated onto a diffraction grating GT1 (a reflecting diffraction grating) of a rotary disk. Then, ±1st-order diffracted lights that are separated and diffracted by a diffraction grating GT1 are reflected by cat's-eyes CEY01 and CEY02 to be returned to the original optical path to be illuminated onto the diffraction grating GT1 of the rotary disk again. Furthermore, the ±1st-order diffracted lights that are synthesized and diffracted by the diffraction grating GT1 are guided to the original light source side, and the ±1st-order diffracted lights are extracted to the outside using the non-polarizing beam splitter NBS0. In the present embodiment, diffraction by the rotary disk is performed twice. Therefore, the frequency difference of two frequencies can be twice as large, and the size of the whole of the optical system can also be reduced. However, it is preferable that it is used in accordance with its purpose because a loss of light intensity increases.

With regard to each of the above embodiments, another example can be applied as follows. The double-frequency light source may also be achieved by a method of moving a linear diffraction grating back and forth other than the cylindrical diffraction grating. Another configuration can be adopted as an optical system that obtains the ±1st-order diffracted lights from the diffraction grating to be synthesized to one coaxial light, and a diffracted light other having an order than ±1st order can also be used. A super luminescent diode (SLD) or a light emitting diode (LED) other than a laser may also be used as an original light source. Another optical configuration can also be adopted as a grating-interference-type-encoder optical system. The apparatus may also be configured so as not to use an optical fiber as a relay of the double-frequency light source and the grating-interference-type-encoder optical system. As the grating-interference-type-encoder optical system, a rotary encoder can also be used instead of the linear encoder. The grating-interference-type encoder may also be applied to another interference measurement apparatus (an interference optical system in which an optical path length difference is near zero).

According to each of the above embodiments, a high-precision and inexpensive heterodyne interferometry displacement measurement apparatus can be provided. In addition, a super luminescence diode (SLD) is used as a light source to constitute a grating-interference-type encoder or a minute displacement interference measurement apparatus to be able to suppress the deterioration of an interference signal (the increase of a distortion) caused by a ghost light and also to perform a high-precision measurement.

The heterodyne interferometry displacement measurement apparatus (the double-frequency light source) of each of the above embodiments can be used as an apparatus that measures a displacement of a mechanical stage equal to or less than nanometer (an industrial mechanical stage, a high-precision shape measurement apparatus, a microscope stage, a high-precision machining apparatus, a semiconductor exposure apparatus, a semiconductor manufacturing apparatus, or the like). The double-frequency light source can be used for measuring a minute displacement or a refractive index in combination with a Michelson interferometer or a Mach-Zehnder interferometer.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. A heterodyne interferometry displacement measurement apparatus includes a first optical system including a light source (LASER) and a diffraction grating (GTO) that generates two diffracted lights to combine the two diffracted lights to generate a combined light and that causes the two diffracted lights to interfere with each other to generate a first frequency difference signal, a second optical system that converts the combined light into two lights of which frequencies are different from each other by a second frequency difference in accordance with a displacement of an object and that causes the two lights to interfere with each other to generate a second frequency difference signal, and an output device that outputs information of a displacement amount of the object based on the first frequency difference signal and the second frequency difference signal.

## Claims

1. A heterodyne interferometry displacement measurement apparatus comprising:

   a first optical system including a light source (LASER) and a diffraction grating (GTO) configured to be rotated at a constant velocity, configured to generate, by irradiating the rotating diffraction grating with a light from the light source, two diffracted lights of which orders are different from each other, of which frequencies are different from each other by a first frequency difference, and of which polarization planes are orthogonal to each other, configured to combine the two diffracted lights to generate a combined light, and configured to cause the two diffracted lights to interfere with each other to generate a first frequency difference signal;
   a second optical system configured to convert the combined light into two lights of which frequencies are different from each other by a second frequency difference in accordance with a displacement of an object, to cause the two lights to interfere with each other to generate a second frequency difference signal; and
   an output device configured to output information of a displacement amount of the object based on the first frequency difference signal and the second frequency difference signal.

2. A heterodyne interferometry displacement measurement apparatus comprising:

   a first optical system including a light source (LASER) and a diffraction grating (GTO) configured to be rotated at a constant velocity, configured to generate, by irradiating the rotating diffraction grating with a light from the light source, two diffracted lights of which orders are different from each other, of which frequencies are different from each other by a first frequency difference, and of which polarization planes are orthogonal to each other, and configured to combine the two diffracted lights to generate a combined light;
   a second optical system configured to convert the combined light into first two lights of which frequencies are different from each other by a second frequency difference and second two lights of which frequencies are different from each other by a third frequency difference in accordance with a displacement of an object, configured to cause the first two lights to interfere with each other to generate a second frequency difference signal, and configured to cause the second two lights to interfere with each other to generate a third frequency difference signal; and

an output device configured to output information of a displacement amount of the object based on the second frequency difference signal and the third frequency difference signal.

3. The apparatus according to claim 1 or 2, wherein the second optical system includes a diffraction grating configured to move in accordance with the displacement of the object.

4. The apparatus according to claim 1 or 2, wherein the second optical system includes an optical system of a Michelson interferometer.

FIG. 1

FIG. 2

FIG. 3

FIG. 4

**FIG. 5**

**FIG. 6**

Europäisches
Patentamt

European
Patent Office

Office européen
des brevets

# EUROPEAN SEARCH REPORT

**Application Number**

EP 11 16 0627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 1 161114 A (NIPPON TELEGRAPH & TELEPHONE) 23 June 1989 (1989-06-23) * the whole document * ----- | 1-4 | INV. G01B9/02 G01D5/38 |
| X | US 5 118 953 A (OTA KAZUYA [JP] ET AL) 2 June 1992 (1992-06-02) * abstract; figures 1,4 * * column 4 - column 17 * ----- | 1-4 | |
| Y | MAZUMDER M K: "LASER DOPPLER VELOCITY MEASUREMENT WITHOUT DIRECTIONAL AMBIGUITY BY USING FREQUENCY SHIFTED INCIDENT BEAMS", APPLIED PHYSICS LETTERS, vol. 16, no. 11, 1 June 1970 (1970-06-01), pages 462-464, XP002649632, DOI: 10.1063/1.1653067 * page 462 - page 463 * ----- | 1-4 | |
| Y | STEVENSON W H: "Optical frequency shifting by means of a rotating diffraction grating.", APPLIED OPTICS, vol. 9, no. 3, 1 March 1970 (1970-03-01), pages 649-652, XP002649633, ISSN: 0003-6935, DOI: 10.1364/AO.9.000649 * the whole document * ----- | 1-4 | TECHNICAL FIELDS SEARCHED (IPC) G01B G01D |
| Y | US 4 696 568 A (WEISTRA MARTEN P [NL]) 29 September 1987 (1987-09-29) * the whole document * ----- | 1-4 | |

The present search report has been drawn up for all claims

| Place of search | Date of completion of the search | Examiner |
|---|---|---|
| Munich | 15 July 2011 | Stanciu, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 16 0627

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2011

| Patent document cited in search report | | Publication date | Patent family member(s) | | Publication date |
|---|---|---|---|---|---|
| JP 1161114 | A | 23-06-1989 | JP | 2675317 B2 | 12-11-1997 |
| US 5118953 | A | 02-06-1992 | JP | 3002504 A | 08-01-1991 |
| US 4696568 | A | 29-09-1987 | DE | 3481553 D1 | 12-04-1990 |
| | | | EP | 0127244 A1 | 05-12-1984 |
| | | | JP | 2068007 C | 10-07-1996 |
| | | | JP | 7074824 B | 09-08-1995 |
| | | | JP | 59226884 A | 20-12-1984 |
| | | | NL | 8301917 A | 17-12-1984 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01156628 B

- JP 3185373 B